# FASCICULE DE BREVET EUROPEEN

(11) **EP 3 075 590 B1**
(45) Date de publication et mention de la délivrance du brevet: **20.05.2020**
(21) Numéro de dépôt: 16163128.8
(22) Date de dépôt: 31.03.2016
(51) Int. Cl.: B60K 17/356, F16H 61/456, F16H 61/4035

(54) **DISPOSITIF D'ENTRAÎNEMENT HYDRAULIQUE POUR VÉHICULE AUTOMOTEUR**
HYDRAULIKANTRIEB FÜR KRAFTFAHRZEUG
HYDRAULIC DRIVE DEVICE FOR MOTOR VEHICLE

(30) Priorité: 02.04.2015 FR 1552847
(43) Date de publication de la demande: 05.10.2016
(73) Titulaire: MANITOU BF, 44150 Ancenis (FR)
(72) Inventeur: ROBERT, René-Luc, 49440 CANDE (FR); TESSON, Christophe, 49123 INGRANDES SUR LOIRE (FR)
(74) Mandataire: Godineau, Valérie

(56) Documents cités:
- EP-A2- 1 780 341
- FR-A1- 2 828 544
- FR-A1- 2 982 202
- US-A- 4 140 196
- US-A- 4 241 577

## Description

L'invention est relative à un dispositif d'entraînement hydraulique pour véhicule automoteur.

L'invention est particulièrement utile pour l'entraînement hydraulique d'un chariot de manutention, notamment de chariot de manutention à bras télescopique ou à nacelle élévatrice.

Elle concerne plus particulièrement un dispositif d'entraînement hydraulique pour véhicule automoteur à quatre roues motrices, comprenant un bloc de translation hydraulique reliant une pompe hydrostatique à des moteurs-roues hydrauliques à savoir, un moteur-roue avant gauche , un moteur-roue avant droit , un moteur-roue arrière gauche et un moteur-roue arrière droit.

On connaît des dispositifs d'entraînement mécanique pour véhicule automoteur comportant un pont avant et un pont arrière munis de roues. Les dispositifs d'entraînement mécanique présentent l'avantage de prévoir un différentiel avec glissement limité.

Le blocage d'un différentiel dans les transmissions mécaniques est assuré de manière simple, ainsi que la limitation du glissement entre côtés du véhicule automoteur.

On connaît également des entrainements hydrostatiques comme décrit dans le brevet FR2982202. Un tel entraînement hydrostatique comporte une pompe hydraulique entraînant quatre moteurs hydrauliques. Les moteurs hydrauliques sont reliés en entrée à la sortie respective d'un diviseur de flux installé en aval de la pompe hydraulique. Ce diviseur de flux alimente par l'une de ses branches le pont avant et par l'autre de ses branches le pont arrière du véhicule. Grâce à la présence d'un diviseur de flux, en cas de patinage de l'une des roues entraînées par un moteur hydraulique, le débit partiel des autres moteurs hydrauliques reste maintenu, ce qui évite l'emballement du moteur hydraulique entrainant la roue en patinage et cela avec des moyens techniques réduits. Toutefois, dans le montage proposé dans le brevet FR2982202, le fonctionnement du diviseur de débit n'est pas optimisé. En effet, du fait que les branches du diviseur alimentent l'une, le pont avant, l'autre, le pont arrière, en cas de braquage même faible, l'écart de débit consommé entre les roues intérieures et les roues extérieures au braquage provoque un déséquilibre du débit du diviseur de flux et donc une élévation de pression néfaste et permanente en braquage.

EP1780341A divulgue un système d'entraînement comportant, en aval de la pompe, un diviseur de flux formé de quatre moteurs couplés à un arbre commun.

Un but de l'invention est de perfectionner les transmissions hydrostatiques de véhicule automoteur, en proposant un rendement amélioré des diviseurs de débit et des fonctions analogues à celles d'un différentiel à glissement limité et d'un blocage de différentiel.

L'invention a pour objet un dispositif d'entraînement hydraulique pour véhicule automoteur à quatre roues motrices , comportant un bloc de translation hydraulique reliant une pompe hydrostatique à des moteurs-roues hydrauliques, à savoir, un moteur-roue avant gauche , un moteur-roue avant droit , un moteur-roue arrière gauche et un moteur-roue arrière droit , caractérisé en ce que le dispositif comprend des moyens de blocage de différentiel et de glissement limité et en ce que le bloc de translation hydraulique comprend, dans au moins un mode de fonctionnement dit « marche avant », deux diviseurs de débit disposés en aval de la pompe hydrostatique, entre les moteurs-roues et la pompe hydrostatique, lesdits diviseurs de débit étant configurés pour alimenter l'un, les moteurs-roues gauches , l'autre, les moteurs-roues droits, chaque diviseur de débit présentant en sortie deux branches configurées pour alimenter, du côté alimenté par ledit diviseur de débit, l'une, le moteur-roue avant, l'autre, le moteur-roue arrière .

Selon d'autres caractéristiques alternatives de l'invention :
- les moyens de blocage de différentiel et de glissement limité comportent des restricteurs de débit ou gicleurs et en ce qu'au moins une partie des moyens de blocage de différentiel et de glissement limité sont, au niveau de chaque diviseur de débit situé en aval de la pompe hydrostatique en mode « marche avant », disposés sur au moins une, de préférence au moins deux, lignes de transfert ou d'équilibrage reliant chacune entre elles les branches dudit diviseur de débit, chaque ligne de transfert étant apte à permettre un transfert de débit entre les branches dudit diviseur de débit.
- chaque diviseur de débit situé en aval de la pompe hydrostatique en mode « marche avant » est équipé de deux lignes de transfert caractérisé en ce que l'une des lignes de transfert de chaque diviseur de débit situé en aval de la pompe hydrostatique en mode « marche avant » est une ligne obturable.
- les moyens de blocage de différentiel et de glissement limité équipant la ligne de transfert non obturable comportent des restricteurs de débit ou gicleurs de diamètre inférieur au diamètre des restricteurs de débit ou gicleurs équipant la ligne de transfert obturable
- les moyens de blocage de différentiel et de glissement limité équipant la ligne de transfert obturable comportent des restricteurs de débit ou gicleurs de diamètre important, de préférence compris entre 0,6 et 1 mm.
- les moyens de blocage de différentiel et de glissement limité équipant la ligne de transfert non obturable comportent des restricteurs de débit ou gicleurs de faible diamètre, de préférence compris entre 0,2 et 0,6 mm.
- le bloc de translation hydraulique comporte au moins un diviseur de débit dit de retour disposé en amont de la pompe hydrostatique en mode « marche avant », ce diviseur de débit présentant en mode « marche avant » deux entrées raccordées aux sorties des moteurs-roues.
   les entrées du diviseur de débit de retour sont en sus de leur raccordement aux moteurs-roues reliées entre elles par au moins une ligne dite d'équilibrage, chaque ligne d'équilibrage étant équipée d'une partie des moyens de blocage de différentiel et de glissement limité, ces moyens de blocage de différentiel et de glissement limité équipant la ou les lignes d'équilibrage comportant des restricteurs de débit ou gicleurs.
- le au moins un diviseur de débit de retour étant équipé de deux lignes d'équilibrage, l'une des lignes d'équilibrage est une ligne obturable.
- les moyens de blocage de différentiel et de glissement limité équipant la ligne d'équilibrage non obturable du diviseur de débit de retour comportent un gicleur de diamètre faible, compris entre 0,3 et 1 mm.
- les moyens de blocage de différentiel et de glissement limité équipant la ligne d'équilibrage obturable du diviseur de débit de retour comportent un gicleur de diamètre compris entre 1 et 2 mm.
- le gicleur des moyens de blocage de différentiel et de glissement limité équipant la ligne d'équilibrage non obturable du diviseur de débit de retour présente un diamètre voisin d'une fois et demi le diamètre des gicleurs des moyens de blocage de différentiel et de glissement limité équipant la ligne de transfert non obturable des diviseurs de débit situés en aval de la pompe hydrostatique en mode « marche avant ».

L'invention a également pour objet un véhicule automoteur à quatre roues motrices dont au moins deux sont directrices comportant un dispositif d'entraînement hydraulique selon l'invention.

L'invention sera mieux comprise grâce à la description qui va suivre donnée à titre d'exemple non limitatif, en référence aux dessins annexés dans lesquels :
La figure 1 représente schématiquement un schéma hydraulique de transmission hydraulique pour véhicule automoteur selon l'invention.
La figure 2 représente schématiquement une vue agrandie partielle du schéma hydraulique de la figure 1.

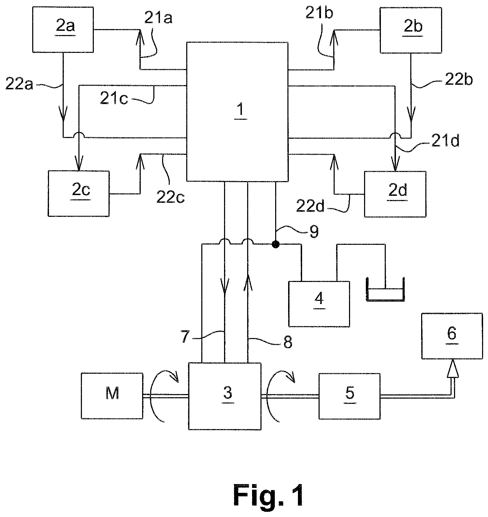

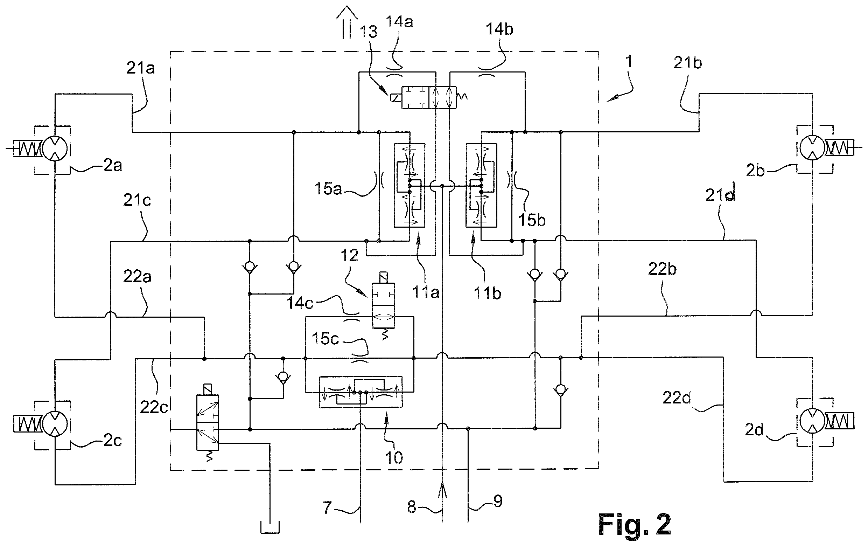

En référence aux figures 1 et 2, les éléments identiques ou fonctionnellement équivalents sont repérés par des chiffres de référence identiques.

Sur la figure 1, un véhicule automoteur selon l'invention comporte un bloc 1 de translation hydraulique relié à des moteurs-roues 2a, 2b, 2c, 2d par des conduits hydrauliques.

Le moteur-roue 2a est un moteur-roue avant gauche relié au bloc 1 de translation hydraulique par des conduits 21a, 22a.

Le moteur-roue 2b est un moteur-roue avant droit relié au bloc 1 de translation hydraulique par des conduits 21b, 22b.

Le moteur-roue 2c est un moteur-roue arrière gauche relié au bloc 1 de translation hydraulique par des conduits 21c, 22c.

Le moteur-roue 2d est un moteur-roue arrière droit relié au bloc 1 de translation hydraulique par des conduits 21d, 22d.

Le bloc 1 de translation hydraulique est relié à une pompe hydrostatique 3 de translation par des conduits 7 et 8 de pression hydraulique et de retour hydraulique.

Le bloc 1 de translation hydraulique est également relié à un bloc proportionnel 4 de régime moteur par un conduit 9.

Le conduit 9 est un conduit de gavage relié au bloc 1 de translation hydraulique.

La pompe hydrostatique 3 de translation est entraînée en rotation par un moteur M à combustion interne ou un moteur électrique.

Le moteur M à combustion interne peut également entraîner, par un arbre coaxial, une pompe 5 auxiliaire pour transmettre la puissance hydraulique à des organes 6 de direction et de manutention, dans le cas d'un chariot à bras télescopique par exemple.

Sur la figure 2, le bloc 1 de translation hydraulique comporte des diviseurs de débit, des vannes de blocage et des moyens pour assurer un blocage de différentiel avec glissement limité.

Le bloc 1 de translation hydraulique comporte deux diviseurs de débit 11a, 11b destinés à diviser le débit par côté gauche et par côté droit dans le mode de fonctionnement dit « marche avant », c'est-à-dire lorsque la pompe 3 hydrostatique alimente l'entrée des deux diviseurs de débit placés alors en aval de la pompe 3 hydrostatique entre la pompe 3 et les moteurs-roues 2a-2d . Il convient en effet de noter que la pompe 3 hydrostatique peut commuter pour un passage en mode de fonctionnement dit « marche arrière »

En mode « marche avant », le débit arrivant par le conduit 8 de pression hydraulique est orienté par le diviseur 1 la du côté gauche du véhicule automoteur.

Le débit arrivant par le conduit 8 est également orienté du côté droit du véhicule par le diviseur de débit 11b. Ainsi, le diviseur de débit 1 la d'alimentation du côté gauche du véhicule présente en sortie deux branches 21a,21c configurées pour alimenter, l'une, représentée en 21a, le moteur-roue avant gauche 2a, l'autre, représentée en 21c, le moteur-roue arrière gauche 2c. De même, le diviseur de débit 11b d'alimentation du côté droit du véhicule présente en sortie deux branches 21b,21d configurées pour alimenter, l'une, représentée en 21b, le moteur-roue avant droit 2b, l'autre, représentée en 21d, le moteur-roue arrière droit 2d.

Le diviseur de débit 1 1a présente deux lignes de transfert ou d'équilibrage reliant chacune entre elles les branches 21a,21c dudit diviseur de débit 11a, chaque ligne de transfert étant apte à permettre un transfert de débit entre les branches dudit diviseur de débit. De même, le diviseur de débit 11b présente deux lignes de transfert ou d'équilibrage reliant chacune entre elles les branches 21b,21d dudit diviseur de débit 11b, chaque ligne de transfert étant apte à permettre un transfert de débit entre les branches dudit diviseur de débit.

Chaque ligne de transfert est équipé d'au moins une partie de moyens de blocage de différentiel et de glissement limité. Ainsi, l'une des lignes de transfert de chaque diviseur de débit est une ligne obturable munie d'un organe d'obturation formé ici par une vanne 13. Cette vanne est normalement ouverte. Pour assurer le blocage du différentiel du chariot, la vanne 13 est fermée par un signal électrique approprié généralement à partir d'une commande du conducteur du véhicule. Ces moyens de blocage de différentiel et de glissement limité comportent des restricteurs de débit. Ainsi, dans l'exemple représenté à la figure 2, la ligne de transfert non obturable du diviseur 11a de débit est équipée d'un restricteur de débit 15a de diamètre inférieur au diamètre du restricteur de débit 14a équipant la ligne de transfert obturable dudit diviseur. De même, la ligne de transfert non obturable du diviseur 11b de débit est équipée d'un restricteur de débit 15b de diamètre inférieur au diamètre du restricteur de débit 14b équipant la ligne de transfert obturable dudit diviseur.

Indépendamment du diviseur de débit 11a ou 11b considéré, les moyens de blocage de différentiel et de glissement limité équipant la ligne de transfert obturable dudit diviseur comportent un restricteur de débit 14a ; 14b de diamètre important, de préférence compris entre 0,6 et 1 mm tandis que les moyens de blocage de différentiel et de glissement limité équipant la ligne de transfert non obturable comportent un restricteur de débit 15a ;15b de faible diamètre, de préférence compris entre 0,2 et 0,6 mm. Chaque diviseur de débit, tel que mentionné ci-dessus, peut être par exemple une vanne hydraulique de division de flux en soi connue.

Le retour par le conduit de pression hydraulique 7 est alimenté par un diviseur de débit primaire 10 encore appelé diviseur de retour recevant le retour des moteurs-roues par l'intermédiaire des conduits 22a, 22b, 22c, 22d. Ce diviseur de débit 10 présente en mode « marche avant » deux entrées raccordées l'une aux sorties des moteurs-roues 2a-2c, l'autre aux sorties des moteurs-roues 2b-2d, ces sorties se raccordant entre elles à chaque fois avant d'être raccordées à une entrée du diviseur 10 de débit.

Les entrées du diviseur de débit 10 de retour sont en sus de leur raccordement aux moteurs-roues reliées entre elles par deux lignes dites d'équilibrage. Chaque ligne d'équilibrage est équipée d'une partie des moyens de blocage de différentiel et de glissement limité. Ces moyens de blocage de différentiel et de glissement limité équipant la ou les lignes d'équilibrage comportent des restricteurs de débit 14c ; 15c . A nouveau, l'une des lignes d'équilibrage est obturée par une vanne 12 normalement ouverte. Pour assurer le blocage du différentiel du chariot, la vanne 12 est fermée par un signal électrique approprié généralement à partir d'une commande du conducteur du véhicule. Il convient de noter que les moyens de blocage de différentiel et de glissement limité équipant la ligne d'équilibrage non obturable du diviseur de débit 10 de retour comportent un gicleur 15c de diamètre faible, compris entre 0,3 et 1 mm tandis que les moyens de blocage de différentiel et de glissement limité équipant la ligne d'équilibrage obturable du diviseur de débit 10 de retour comportent un gicleur 14c de diamètre compris entre 1 et 2 mm. De préférence, le gicleur 15c des moyens de blocage de différentiel et de glissement limité équipant la ligne d'équilibrage non obturable du diviseur de débit 10 de retour présente un diamètre voisin d'une fois et demi le diamètre des gicleurs ou restricteurs de débit 15a, 15b des moyens de blocage de différentiel et de glissement limité équipant la ligne de transfert non obturable des diviseurs de débit 11a ; 11b situés en aval de la pompe 3 hydrostatique en mode « marche avant ». Par diamètre voisin d'une fois et demi, on entend compris entre 1,4 et 1,6.

La pression de gavage arrivant par le conduit hydraulique 9 est transmise par l'intermédiaire de plusieurs capteurs anti-retour aux conduits 21a, 21b, 21c, 21d de pression arrivante et au retour commun aux conduits 22a, 22b, 22c, 22d.

Comme mentionné ci-dessus, pour assurer le blocage du différentiel du chariot, les vannes 12 et 13 sont fermées par un signal électrique approprié.

Ces vannes sont normalement ouvertes. En position ouverte, ce sont les restricteurs de débit 14a,14b,14c disposés sur les lignes de transfert ou d'équilibrage obturables qui sont actifs lorsque cela est nécessaire. Ainsi, par exemple les restricteurs de débit 14a et 14b freinent l'arrivée d'huile de l'une des branches du diviseur de débit vers l'autre manche lorsque l'autre branche du diviseur de débit est raccordée à une roue dite en l'air c'est-à-dire écartée du sol. En l'absence de ces restricteurs de débit, toute l'huile de la branche du diviseur alimentant la roue en contact avec le sol tenderait à aller dans l'autre branche du diviseur de débit.

Lors de la fermeture des vannes 12 et 13 pour assurer le blocage de différentiel, un équilibrage est prévu grâce aux restricteurs de débit ou gicleurs de faible diamètre, à savoir les gicleurs 15a, 15b, 15c montés en dérivation des diviseurs de débit 11a, 11b et 10 sur les lignes de transfert ou d'équilibrage non obturables.

Ainsi, lors de la fermeture des vannes 12 et 13 de blocage de différentiel, un équilibrage est effectué grâce aux gicleurs 15a, 15b, 15c de faible diamètre.

Comme mentionné ci-dessus, le diamètre des gicleurs 14a, 14b est avantageusement compris entre 0,6 mm et 1 mm.

Le diamètre du gicleur 14c est avantageusement compris entre 1,2 et 2 mm.

Ainsi, grâce à l'invention, un bloc 1 de translation hydraulique permet d'obtenir des caractéristiques de conduite identiques ou équivalentes aux caractéristiques de conduite d'un entraînement mécanique à blocage de différentiel avec glissement limité.

Des moyens additionnels peuvent être intégrés au bloc 1 de translation hydraulique, tels qu'une liaison à un bloc de défreinage, dans le cas où les moteurs-roue 2a, 2b, 2c, 2d sont des moteurs-roues à position normalement bloquée.

Ces moyens additionnels, de type connu, ne nécessitent pas de description plus détaillée,

## Revendications

1. Dispositif d'entraînement hydraulique pour véhicule automoteur à quatre roues (2a - 2d) motrices , comprenant un bloc (1) de translation hydraulique reliant une pompe (3) hydrostatique à des moteurs-roues (2a - 2d) hydrauliques à savoir, un moteur-roue avant gauche (2a), un moteur-roue avant droit (2b), un moteur-roue arrière gauche (2c) et un moteur-roue arrière droit (2d) **caractérisé en ce que** le dispositif comprend des moyens (14a - 14c, 15a - 15c) de blocage de différentiel et de glissement limité et **en ce que** le bloc (1) de translation hydraulique comprend, dans au moins un mode de fonctionnement dit « marche avant », deux diviseurs de débit (11a, 11b) disposés en aval de la pompe (3) hydrostatique, entre les moteurs-roues (2a - 2d) et la pompe (3) hydrostatique, lesdits diviseurs de débit (11a,11b) étant configurés pour alimenter (11a) les moteurs-roues gauches (2a,2c), l'autre (11b), les moteurs-roues droits (2b,2d), chaque diviseur de débit (11a; 11b) présentant en sortie deux branches (21a,21c ; 21b,21d) configurées pour alimenter, du côté alimenté par ledit diviseur de débit (11a ; 11b), l'une (21a ; 21b) le moteur-roue avant (2a ; 2b), l'autre (21c ; 21d) le moteur-roue arrière (2c ;2d).

2. Dispositif selon la revendication précédente, **caractérisé par le fait que** les moyens de blocage de différentiel et de glissement limité comportent des restricteurs de débit (14a,14b,15a, 15b) ou gicleurs et en ce qu'au moins une partie des moyens de blocage de différentiel et de glissement limité sont, au niveau de chaque diviseur de débit (11a ; 11b) situé en aval de la pompe (3) hydrostatique en mode « marche avant », disposés sur au moins une, de préférence au moins deux, lignes de transfert ou d'équilibrage reliant chacune entre elles les branches (21a,21c ; 21b,21d) dudit diviseur de débit (11a ; 11b), chaque ligne de transfert étant apte à permettre un transfert de débit entre les branches dudit diviseur de débit.

3. Dispositif selon la revendication 2, du type dont chaque diviseur de débit (11a ; 11b) situé en aval de la pompe (3) hydrostatique en mode « marche avant » est équipé de deux lignes de transfert **caractérisé en ce que** l'une des lignes de transfert de chaque diviseur de débit (11a ;1 l b) situé en aval de la pompe (3) hydrostatique en mode « marche avant » est une ligne obturable.

4. Dispositif selon la revendication 3, **caractérisé par le fait que** les moyens de blocage de différentiel et de glissement limité équipant la ligne de transfert non obturable comportent des restricteurs de débit (15a ;15b) ou gicleurs de diamètre inférieur au diamètre des restricteurs de débit ou gicleurs (14a ;14b) équipant la ligne de transfert obturable .

5. Dispositif selon l'une des revendications 3 ou 4, **caractérisé par le fait que** les moyens de blocage de différentiel et de glissement limité équipant la ligne de transfert obturable comportent des restricteurs de débit (14a ; 14b) ou gicleurs de diamètre important, de préférence compris entre 0,6 et 1 mm.

6. Dispositif selon l'une des revendications 3 à 5, **caractérisé par le fait que** les moyens de blocage de différentiel et de glissement limité équipant la ligne de transfert non obturable comportent des restricteurs de débit (15a ;15b) ou gicleurs de faible diamètre, de préférence compris entre 0,2 et 0,6 mm.

7. Dispositif selon l'une des revendications précédentes, **caractérisé par le fait que** le bloc (1) de translation hydraulique comporte au moins un diviseur de débit (15c) dit de retour disposé en amont de la pompe (3) hydrostatique en mode « marche avant », ce diviseur de débit (10) présentant en mode « marche avant » deux entrées raccordées aux sorties des moteurs-roues (2a-2d).

8. Dispositif selon la revendication 7, **caractérisé par le fait que** les entrées du diviseur de débit (10) de retour sont en sus de leur raccordement aux moteurs-roues (2a-2d) reliées entre elles par au moins une ligne dite d'équilibrage, chaque ligne d'équilibrage étant équipée d'une partie des moyens de blocage de différentiel et de glissement limité, ces moyens de blocage de différentiel et de glissement limité équipant la ou les lignes d'équilibrage comportant des restricteurs de débit (14c ;15c) ou gicleurs.

9. Dispositif selon la revendication 8, du type dont le au moins un diviseur de débit (10) de retour est équipé de deux lignes d'équilibrage **caractérisé en ce que** l'une des lignes d'équilibrage est une ligne obturable.

10. Dispositif selon la revendication 9, **caractérisé par le fait que** les moyens de blocage de différentiel et de glissement limité équipant la ligne d'équilibrage non obturable du diviseur de débit (10) de retour comportent un gicleur (15c) de diamètre faible, compris entre 0,3 et 1 mm.

11. Dispositif selon l'une des revendications 9 ou 10, **caractérisé par le fait que** les moyens de blocage de différentiel et de glissement limité équipant la ligne d'équilibrage obturable du diviseur de débit (10) de retour comportent un gicleur (14c) de diamètre compris entre 1 et 2 mm.

12. Dispositif selon la revendication 10 et la revendication 6 , **caractérisé par le fait que** le gicleur (15c) des moyens de blocage de différentiel et de glissement limité équipant la ligne d'équilibrage non obturable du diviseur de débit (10) de retour présente un diamètre voisin d'une fois et demi le diamètre des gicleurs (15a, 15b) des moyens de blocage de différentiel et de glissement limité équipant la ligne de transfert non obturable des diviseurs de débit (11a ; 11b) situés en aval de la pompe (3) hydrostatique en mode « marche avant » .

13. Véhicule automoteur comportant un dispositif selon l'une quelconque des revendications 1 à 12.

## Patentansprüche

1. Hydraulische Antriebsvorrichtung für Kraftfahrzeug mit vier antreibenden Rädern (2a-2d), umfassend eine hydraulische Translationseinheit (1), die eine hydrostatische Pumpe (3) mit hydraulischen antreibenden Rädern (2a-2d) verbindet, nämlich einem Antriebsrad vorn links (2a), einem Antriebsrad vorn rechts (2b), einem Antriebsrad hinten links (2c) und einem Antriebsrad hinten rechts (2d), **dadurch gekennzeichnet, dass** die Vorrichtung Sperrausgleichsgetriebe-Blockiermittel (14a-14c, 15a-15c) umfasst und dass die hydraulische Translationseinheit (1) in mindestens einem als "Vorwärtsfahrt" bezeichneten Betriebsmodus zwei Durchsatzteiler (11a, 11b) umfasst, die der hydrostatischen Pumpe (3) nachgelagert angeordnet sind, zwischen den Antriebsrädern (2a-2d) und der hydrostatischen Pumpe (3), wobei die Durchsatzteiler (11a, 11b) konfiguriert sind, um, der eine (11a), die linken Antriebsräder (2a, 2c), der andere (11b), die rechten Antriebsräder (2b, 2d) anzutreiben, wobei jeder Durchsatzteiler(11a; 11b) am Ausgang zwei Schenkel (21a 21c; 21b, 21d) aufweist, die konfiguriert sind, um auf der von dem Durchsatzteiler (11a; 11b) versorgten Seite, der eine (21a; 21b) das vordere Antriebsrad (2a; 2b), der andere (21c; 21d) das hintere Antriebsrad (2c; 2d) zu versorgen.

2. Vorrichtung nach vorangehendem Anspruch, **dadurch gekennzeichnet, dass** die Sperrausgleichsgetriebe-Blockiermittel Durchgangsbegrenzer (14a, 14b, 15a, 15b) oder Düsen aufweisen und dass mindestens ein Teil der Sperrausgleichsgetriebe-Blockiermittel im Bereich jedes Durchsatzteilers (11a; 11b), der sich im Modus "Vorwärtsfahrt" der hydrostatischen Pumpe (3) nachgelagert befindet, auf mindestens einer, vorzugsweise mindestens zwei, Transfer- oder Ausgleichsleitungen angeordnet sind, die jede von ihnen die Schenkel (21a, 21c; 21b, 21d) des Durchsatzteilers (11a;11b) verbindet, wobei jede Transferleitung imstande ist, einen Durchsatztransfer zwischen den Schenkeln des Durchsatzteilers zu erlauben.

3. Vorrichtung nach Anspruch 2 des Typs, bei dem jeder Durchsatzteiler (11a; 11b), der sich im Modus "Vorwärtsfahrt" der hydrostatischen Pumpe (3) nachgelagert befindet, mit zwei Transferleitungen ausgestattet ist, **dadurch gekennzeichnet, dass** die eine der Transferleitungen jedes Durchsatzteilers (11a; 11b), der sich im Modus "Vorwärtsfahrt" der hydrostatischen Pumpe (3) nachgelagert befindet, eine verschließbare Leitung ist.

4. Vorrichtung nach Anspruch 3, **dadurch gekennzeichnet, dass** die Sperrausgleichsgetriebe-Blockiermittel, die die nicht verschließbare Transferleitung ausstatten, Durchgangsbegrenzer (15a; 15b) oder Düsen mit einem Durchmesser aufweisen, der kleiner als der Durchmesser der Durchgangsbegrenzer oder Düsen (14a; 14b) ist, die die verschließbare Transferleitung ausstatten.

5. Vorrichtung nach einem der Ansprüche 3 oder 4, **dadurch gekennzeichnet, dass** die Sperrausgleichsgetriebe-Blockiermittel, die die verschließbare Transferleitung ausstatten, Durchgangsbegrenzer (14a; 14b) oder Düsen mit großem Durchmesser aufweisen, der vorzugsweise zwischen 0,6 und 1 mm liegt.

6. Vorrichtung nach einem der Ansprüche 3 bis 5, **dadurch gekennzeichnet, dass** die Sperrausgleichsgetriebe-Blockiermittel, die die nicht verschließbare Transferleitung ausstatten, Durchgangsbegrenzer (15a; 15b) oder Düsen mit kleinem Durchmesser aufweisen, der vorzugsweise zwischen 0,2 und 0,6 mm liegt.

7. Vorrichtung nach einem der vorangehenden Ansprüche, **dadurch gekennzeichnet, dass** die hydraulische Translationseinheit (1) mindestens einen als Rücklauf bezeichneten Durchsatzteiler (15c) aufweist, der im Modus "Vorwärtsfahrt" der hydrostatischen Pumpe (3) vorgelagert angeordnet ist, wobei dieser Durchsatzteiler (10) im Modus "Vorwärtsfahrt" zwei Eingänge aufweist, die an die Ausgänge der Antriebsräder (2a-2d) angeschlossen sind.

8. Vorrichtung nach Anspruch 7, **dadurch gekennzeichnet, dass** die Eingänge des Rücklauf-Durchsatzteilers (10) zusätzlich zu ihrem Anschluss an die Antriebsräder (2a-2d) untereinander durch mindestens eine als Ausgleichsleitung bezeichnete Leitung verbunden sind, wobei jede Ausgleichsleitung mit einem Teil der Sperrausgleichsgetriebe-Blockiermittel ausgestattet ist, wobei diese Sperrausgleichsgetriebe-Blockiermittel, die die Ausgleichsleitung(en) ausstatten, Durchgangsbegrenzer (14c; 15c) oder Düsen aufweisen.

9. Vorrichtung nach Anspruch 8 des Typs, bei dem der mindestens eine Rücklauf-Durchsatzteiler (10) mit zwei Ausgleichsleitungen ausgestattet ist, **dadurch gekennzeichnet, dass** die eine der Ausgleichsleitungen eine verschließbare Leitung ist.

10. Vorrichtung nach Anspruch 9, **dadurch gekennzeichnet, dass** die Sperrausgleichsgetriebe-Blockiermittel, die die nicht verschließbare Ausgleichsleitung des Rücklauf-Durchsatzteilers (10) ausstatten, eine Düse (15c) mit kleinem Durchmesser aufweisen, der zwischen 0,3 und 1 mm liegt.

11. Vorrichtung nach einem der Ansprüche 9 oder 10, **dadurch gekennzeichnet, dass** die Sperrausgleichsgetriebe-Blockiermittel, die die verschließbare Ausgleichsleitung des Rücklauf-Durchsatzteilers (10) ausstatten, eine Düse (14c) mit einem Durchmesser aufweisen, der zwischen 1 und 2 mm liegt.

12. Vorrichtung nach Anspruch 10 und Anspruch 6, **dadurch gekennzeichnet, dass** die Düse (15c) der Sperrausgleichsgetriebe-Blockiermittel, die die nicht verschließbare Ausgleichsleitung des Rücklauf-Durchsatzteilers (10) ausstattet, einen Durchmesser aufweist, der etwa dem Anderthalbfachen des Durchmessers der Düsen (15a, 15b) der Sperrausgleichsgetriebe-Blockiermittel entspricht, die die nicht verschließbare Transferleitung der Durchsatzteiler (11a; 11b) ausstatten, die sich im Modus "Vorwärtsfahrt" der hydrostatischen Pumpe (3) nachgelagert befinden.

13. Kraftfahrzeug, aufweisend eine Vorrichtung nach einem der Ansprüche 1 bis 12.

## Claims

1. A hydraulic drive device for a motor vehicle with four drive wheels (2a - 2d), comprising a hydraulic translation unit (1) coupling a hydrostatic pump (3) with hydraulic drive wheels (2a - 2d), namely a left front drive wheel (2a), a right front drive wheel (2b), a left rear drive wheel (2c) and a right rear drive wheel (2d), **characterized in that** the device comprises limited differential blocking and slipping means (14a - 14c, 15a - 15c) and **in that** the hydraulic translation unit (1) comprises, in at least one so-called "forward" operating mode, two flow dividers (11a, 11b) positioned downstream from the hydrostatic pump (3), between the drive wheels (2a - 2d) and the hydrostatic pump (3), said flow dividers (11a, 11b) being configured to supply one (11a) the left drive wheels (2a, 2c), the other (11b), the right drive wheels (2b, 2d), each flow divider (11a; 11b) having, at the outlet, two branches (21a, 21c; 21b, 21d) configured to supply, on the side supplied by said flow divider (11a; 11b), one (21a; 21b) the front drive wheel (2a; 2b), the other (21c; 21d) the rear drive wheel (2c; 2d).

2. The device according to the preceding claim, **characterized in that** the limited differential blocking and slipping means include flow restrictors (14a, 14b, 15a, 15b) or spray nozzles and **in that** at least part of the limited differential blocking and slipping means are, at each flow divider (11a; 11b), located downstream from the hydrostatic pump (3) in "forward" mode, positioned on at least one, preferably two, transfer or balancing lines coupling each of the branches (21a, 21c; 21b, 21d) of said flow divider (11a, 11b) to one another, each transfer line being able to allow a flow transfer between the branches of said flow divider.

3. The device according to claim 2, of the type whereof each flow divider (11a; 11b) located downstream from the hydrostatic pump (3) in "forward" mode is equipped with two transfer lines, **characterized in that** one of the transfer lines of each flow divider (11a; 11b) located downstream from the hydrostatic pump (3) in "forward" mode is a closable line.

4. The device according to claim 3, **characterized in that** the limited differential blocking and slipping means equipping the non-closable transfer line include flow restrictors (15a; 15b) or spray nozzles with a diameter smaller than the diameter of the flow restrictors or spray nozzles (14a; 14b) equipping the closable transfer line.

5. The device according to one of claims 3 or 4, **characterized in that** the limited differential blocking and slipping means equipping the closable transfer line include flow restrictors (14a; 14b) or spray nozzles of significant diameter, preferably between 0.6 and 1 mm.

6. The device according to one of claims 3 to 5, **characterized in that** the limited differential blocking and slipping means equipping the non-closable transfer line include flow restrictors (15a; 15b) or spray nozzles of small diameter, preferably between 0.2 and 0.6 mm.

7. The device according to one of the preceding claims, **characterized in that** the hydraulic translation unit (1) includes at least one so-called return flow divider (15c) positioned upstream from the hydrostatic pump (3) in "forward" mode, this flow divider (10) having, in "forward" mode, two inlets connected to the outlets of the drive wheels (2a-2d).

8. The device according to claim 7, **characterized in that** the inlets of the return flow divider (10) are in addition to their connection to the drive wheels (2a-2d) coupled to one another by at least one so-called balancing line, each balancing line being equipped with part of the limited differential blocking and slipping means, these limited differential blocking and slipping means equipping the balancing line(s) including flow restrictors (14c; 15c) or spray nozzles.

9. The device according to claim 8, of the type whereof the at least one return flow divider (10) is equipped with two balancing lines, **characterized in that** one of the balancing lines is a closable line.

10. The device according to claim 9, **characterized in that** the limited differential blocking and slipping means equipping the non-closable balancing line of the return flow divider (10) include a spray nozzle (15c) with a small diameter, between 0.3 and 1 mm.

11. The device according to one of claims 9 or 10, **characterized in that** the limited differential blocking and slipping means equipping the closable balancing line of the return flow divider (10) include a spray nozzle (14c) with a diameter of between 1 and 2 mm.

12. The device according to claim 10 and claim 6, **characterized in that** the spray nozzle (15c) of the limited differential blocking and slipping means equipping the non-closable balancing line of the return flow divider (10) has a diameter close to one and a half times the diameter of the spray nozzles (15a, 15b) of the limited differential blocking and slipping means equipping the non-closable transfer line of the flow dividers (11a; 11b) located downstream from the hydrostatic pump (3) in "forward" mode.

13. A motor vehicle including a device according to any one of claims 1 to 12.
